**Europäisches Patentamt**

**European Patent Office**

**Office européen des brevets**

(19)

(11) Veröffentlichungsnummer: **0 185 300 B1**

(12) **EUROPÄISCHE PATENTSCHRIFT**

(45) Veröffentlichungstag der Patentschrift: **03.04.91**

(51) Int. Cl.⁵: **A23J 1/20, A23C 9/144**

(21) Anmeldenummer: **85115733.9**

(22) Anmeldetag: **10.12.85**

(54) **Verfahren zum Enteiweissen von Milch und/oder Molke.**

(30) Priorität: **12.12.84 DE 3445223**

(43) Veröffentlichungstag der Anmeldung:
**25.06.86 Patentblatt 86/26**

(45) Bekanntmachung des Hinweises auf die
Patenterteilung:
**03.04.91 Patentblatt 91/14**

(84) Benannte Vertragsstaaten:
**DE FR GB NL**

(56) Entgegenhaltungen:
**AT-B- 376 549**
**FR-A- 2 345 939**

**CHEMICAL ABSTRACTS, Band 85, 1976, Seite 422, Nr. 76484m, Columbus, Ohio, US; K.R. MARSHALL et al.: "The use of cation exchange in the production of traditional lactalbumin from cheddar cheese whey", & N. Z. J. DAIRY SCI. TECHNOL. 1976, 11(1), 69-70**

**CHEMICAL ABSTRACTS, Band 87, 1977, Seite 553, Nr. 199337q, Columbus, Ohio, US; M.T. SHULKAMY et al.: "Effect of hydrogen ion concentration and heat treatment on the yield of precipitated whey proteins", & AGRIC. RES. REV. 1976, 54(6), 79-86**

**CHEMICAL ABSTRACTS, Band 87, 1977, Seite 553, Nr. 199338r, Columbus, Ohio, US; A.F. MONIB et al.: "A simple method for precipitating whey proteins", & AGRIC. RES. REV. 1976, 54(6), 87-90**

(73) Patentinhaber: **Herrmann, Martin, Prof. Dr.**
**Bussardhorst 32**
**W-3050 Wunstorf 1/OT Luthe(DE)**

(72) Erfinder: **Herrmann, Martin, Prof. Dr.**
**Bussardhorst 32**
**W-3050 Wunstorf 1/OT Luthe(DE)**

(74) Vertreter: **König, Norbert, Dipl.-Phys. Dr. et al**
**Patentanwälte Leine & König Burckhardt-strasse 1**
**W-3000 Hannover 1(DE)**

**Beschreibung**

Die Erfindung betrifft ein Verfahren zum Enteiweißen von Milch und/oder Molke gemäß Oberbegriff des Anspruchs 1.

Die bei der Käseherstellung anfallende Molke weist einen Eiweißgehalt in der Größenordnung von 0,8 % auf. In der letzten Zeit sind Verfahren zur Enteiweißung von Molke entwickelt worden. Über die Ultrafiltration von Molke ist es möglich, den Eiweißanteil der Molke auf Werte von 0,18 - 0,26 % zu reduzieren, wobei mit der Ultrafiltration im Gegensatz zu anderen Verfahren natives Eiweiß gewonnen wird, das teilweise für eine Weiterverarbeitung durch eine thermische Behandlung denaturiert werden muß.

Mit den bisher bekannten Verfahren über die Hitzedenaturierung der Serumproteine (Centri - Whey - Verfahren und Thermoquarkverfahren) und Separierung dieser Proteine ist es möglich, Eiweißwerte in der Molke von 0,45 - 0,50 % zu erreichen, da nur etwa 50 % der Serumproteine über diesen Weg ausgefällt und über ein Abtrennverfahren gewonnen werden können. Zu berücksichtigen ist hierbei, daß bei der Molke ein Anteil von etwa 0,2 % Eiweiß als Reststickstoff vorhanden ist, der für eine Eiweißgewinnung nicht zur Verfügung steht.

Weiterhin ist aus der Literatur bekannt, daß die Molke bei der Herstellung von entsalztem Molkenpulver teil- oder vollentsalzt wird, wobei hierfür die Elektrodialyse oder der Ionenaustauscher eingesetzt werden.

Aus der Zeitschrift "Chemical Abstracts 85, 422, Nr. 76484, (1976)" ist ein Verfahren zum Ausfällen von Eiweiß bei Molke bekannt, bei dem ein Teil der Molke durch Ionenaustausch bei 10 °C auf einen niedrigen pH-Wert von 1,5 bis 1,6 eingestellt wird, dieser Teil der Molke mit dem unbehandelten Molkenteil zur Einstellung eines pH-Wertes von 4,5 gemischt und die Mischung dann zum Ausfällen des Eiweißes erhitzt wird.

Durch die FR-A 23 45 939 ist ein Verfahren zum Ausfällen von Eiweiß aus Molke bekannt, bei dem ebenfalls zunächst ein Teil der Molke mit einem Kationenaustauscher behandelt wird, um diesen Molkenanteil auf einen niedrigen pH-Wert von ca. 1,2 einzustellen. Dieser so auf einen stark sauren Wert eingestellte Molkenteil wird mit der anderen unbehandelten Molke vermischt, derart, daß die Mischung auf einen pH-Wert von etwa 4,6 eingestellt wird. Danach wird die Mischung auf Temperaturen von 90 bis 95 °C erhitzt, um das Eiweiß auszufällen.

Mit diesen beiden bekannten Verfahren können nur etwa 50 % der Molkenproteine ausgefällt werden, so daß nur ein Resteiweißgehalt von nicht unter 0,4 % erreichbar ist.

Der Erfindung liegt die Aufgabe zugrunde, das eingangs genannte Verfahren so zu verbessern, daß eine höhere Ausbeute an ausgefälltem Eiweiß erhalten wird.

Diese Aufgabe wird durch die im Kennzeichen des Anspruchs 1 angegebenen Verfahrensschritte gelöst.

Zweckmäßige und vorteilhafte Weiterbildungen der erfindungsgemäßen Aufgabenlösungen sind in den Unteransprüchen gekennzeichnet.

Das erfindungsgemäße Verfahren basiert entscheidend auf der Entsalzung von Milch und/oder Molke, wobei dann über die Erhitzung nahezu 100 % der Serumproteine denaturiert und ausgefällt werden können.

Mit dem erfindungsgemäßen Verfahren ist eine Reduzierung des Eiweißanteiles auf Werte um 0,2 % erreichbar. Zum Verständnis ist es hilfreich, die Struktur der Inhaltsstoffe in der Milch und Molke näher zu betrachten.

Von der ernährungsphysiologischen Seite ist bekannt, daß die Serumproteine, nativ oder denaturiert, interessanter sind als die Kaseine. im Vergleich hierzu haben die Serumproteine eine höhere ernährungsphysiologische Wertigkeit. Die technologosche Bedeutung der Serumproteine ist dahingehend bekannt, daß sie bereits ab 70 °C denaturieren und mit den Kaseinen bei der thermischen Behandlung Kopräzipitate bilden.

Eine weitere Bedeutung haben die Mineralstoffe, die in der Milch als Mengen- und Spurenelemente vorkommen.

Erhöht man den Salzanteil in der Milch oder in der Molke, konkurrieren in hohen Salzkonzentrationen die Salzionen mit den Proteinen, wodurch sich die Löslichkeit der Proteine verringert. Hierdurch könen durch entsprechende Salzzugaben Proteine ausgefällt werden, das auf dem analytischen Sektor bei der Enteiweißung von Milchproben genutzt wird.

Versuche haben gezeigt, daß bei der Entsalzung der Milch und/oder Molke die Proteine andere Verhaltensformen zeigen, wobei der Salzgehalt zur Stabilisierung der Proteine eine weitaus größere Bedeutung aufweist als bisher angenommen.

Die durchgeführten Versuche weisen darauf hin, daß das entmineralisierte Produkt bezüglich der Stabilisierung der Proteine, in diesem Fall der Serumproteine, anscheinend einer Hitzebehandlung nicht mehr gewachsen ist.

Ferner ist eine weitergehende Kopräzipitatbildung (Komplexbildung von Kaseinen und Serumproteinen bei der Erhitzung) durch den fehlenden Mineralstoffgehalt vorhanden und somit eine nahezu 100%ige Enteiweißung möglich.

Bei dem der Erfindung zugrundeliegenden Verfahren kann nach folgenden Verfahrenswegen gearbeitet werden:

Sauermolke, Süßmolke und/oder Milch

Entsalzung - Elektrodialyse oder Ionenaustauscher

pH-Wert-Einstellung

Erhitzung mit Heißhaltung

Kühlung

Abtrennen der ausgefallenen Protein

------------------------------------

Eiweiß und enteiweißte Molke und/oder Milch

Die Ansäuerung bzw. die pH-Wert-Einstellung kann durch eine Säure oder auch mikrobiologisch erfolgen. Durch die weiteren Ausgestaltungen nach den Ansprüchen 5 und 6 ergeben sich wirtschaftliche Vorteile, insbesondere bei der Entsalzung durch Elektrodialyse.

Eine zweckmäßige und vorteilhafte Verwendung des erfindungsgemäßen Verfahrens ist im Anspruch 8 angegeben. Die verbesserte Haltbarkeit wird insbesondere dadurch erzielt, daß nach einer Teil- oder Vollentsalzung eine pH-Wert-Einstellung (gemäß Ansprüch) im Produkt durchgeführt wird. Durch die Teil- oder Vollentsalzung wird der Säureanteil und weiterhin das Puffersystem im Produkt reduziert. Durch die Entsäuerung und Ausschaltung des Puffersystems ist eine pH-Wert-Einstellung des Produktes leicht möglich. Durch einen niedrigen pH-Wert mit einem geringeren Säureanteil ist das entsprechende Produkt geschmacklich für den Verbraucher akzeptabel, wobei über den niedrigen pH-Wert das Wachstum der Mikroorganismen stark verzögert wird, wodurch eine Haltbarkeitsverlängerung erzielt wird.

Bei den Versuchen wurden die Proben mit einer Ultrazentrifuge enteiweißt, filtriert bzw. aus der dickgelegten Milch die Molke abgezogen. Die Versuche mit einem Separator der Fa. Westfalia, in dem das Eiweiß im Schlammraum der Trommel aufgefangen wurde, ergaben annähernd die gleichen Ergebnisse, wobei der Eiweißgehalt in der Molke geringfügig höher lag.

Beispiele

Eine Sauermolke mit einem Eiweißgehalt von 1 % wurde bei 95° C 10 min erhitzt, bei 40-50° C in einer Ultrazentrifuge separiert, wobei sich ein Eiweißgehalt in der Molke von 0,43 % ergab. Die derart behandelte Sauermolke wurde entsalzt, und bei gleichbleibender Erhitzung und Separierung mit der Ultrazentrifuge ergaben sich in Abhängigkeit vom Entsalzungsgrad folgende Eiweißwerte in der Molke:

3

| | pH-Wert der Sauermolke | Eiweißgehalt der elektro-dialysierten, erhitzten u. separierten Molke in % |
|---|---|---|
| Ausgangsmolke, nicht entsalzt | 4,35 | 0,43 |
| | 4,38 | 0,40 |
| | 4,40 | 0,36 |
| | 4,46 | 0,32 |
| | 4,62 | 0,30 |
| | 4,98 | 0,29 |
| | 5,32 | 0,28 |
| Nahezu vollent-salzte Molke | 5,36 | 0,25 |

Aus dieser Tabelle ist ersichtlich, daß eine Korrelation zwischen dem Entmineralisierungsgrad und dem Resteiweißgehalt der erhitzten, separierten Molke vorhanden ist. Je weniger Mineralstoffe sich in der Molke befinden, desto geringer ist der Eiweißgehalt in der behandelten Molke. Weiterhin ist aus der Tabelle ersichtlich, daß die Entsalzung einen Einfluß auf den pH-Wert hat. Im Verlauf der Entsalzung hat sich der pH-Wert von 4,35 (Ausangssalzgehalt der Molke) auf pH 5,36 (Entsalzungsgrad etwa 80%) erhöht.

Andere Versuchsreihen zeigten folgende Resultate: Elektrodyalisierte Molke, pH 4,82, Eiweißgehalt 3,1 bis 3,5 % wurde mit 38 % Magermilch versetzt. Das Gemisch hatte einen pH-Wert von 6,50 und einen Eiweißgehalt von 1,73 %. Dieses wurde erhitzt und mit Zitronensäure auf einen pH-Wert von 4,5 bei der angeführten Erhitzungstemperatur eingestellt.

## Ansprüche

1. Verfahren zum Enteiweißen von Milch und/oder Molke unter Verwendung folgender Verfahrensschritte:
   - Einstellung des pH-Wertes der Milch und/oder Molke im sauren Bereich,
   - Erhitzung der Milch und/oder Molke,
   - Abtrennung von ausgefälltem Eiweiß,
   **gekennzeichnet durch** folgende nacheinander durchgeführte Verfahrensschritte:
   a) Teil- oder Vollentsalzung der gesamten für die Enteiweißung vorgesehenen Milch und/oder Molke,
   b) Erhitzung der entsalzten Milch und/oder Molke,
   c) Einstellung des pH-Wertes im heißen Zustand der Milch und/oder Molke zum Ausfällen des Eiweißes, derart, daß die den isoelektrischen Punkten der Proteine der Milch und/oder Molke zugeordneten pH-Werte durchlaufen werden.

2. Verfahren nach Anspruch 1, **dadurch gekennzeichnet**, daß die entsalzte Milch und/oder Molke auf pH-Werte zwischen 5,4 und 3,5 eingestellt wird.

3. Verfahren nach Anspruch 1 oder 2, **dadurch gekennzeichnet,** daß der entsälzten Molke nach der Entsalzung zusätzlich Milch oder der entsalzten Milch nach der Entsalzung zusätzlich Molke zugegeben wird.

EP 0 185 300 B1

4. Verfahren nach einem der vorhergehenden Ansprüche, **dadurch gekennzeichnet,** daß die Milch und/oder Molke vor dem Abtrennen der Eiweiße gekühlt wird, vorzugsweise auf 20 bis 70 °C.

5. Verfahren nach einem der vorhergehenden Ansprüche, **dadurch gekennzeichnet,** daß vor oder nach der Entsalzung die Milch und/oder Molke konzentriert wird.

6. Verfahren nach Anspruch 5, **dadurch gekennzeichnet,** daß die Milch und/oder Molke bis auf eine Trockensubstanz von 60 % eingestellt wird.

7. Verfahren nach einem der vorhergehenden Ansprüche, **dadurch gekennzeichnet,** daß die pH-Werteinstellung durch Säure, Lauge, mikrobiologisch oder durch Ionenaustausch erfolgt.

8. Verwendung des Verfahrens nach einem der Ansprüche 1 bis 7 bei der Herstellung von Milch-, Sauermilch- und Käsereierzeugnissen mit weitergehender Kopräzipitatbildung und/oder Haltbarkeit.


## Claims

1. Process for deproteination of milk and/or whey under application of the following process steps:
   - adjustment of the pH-value of milk and/or whey in an acidic range,
   - heating of the milk and/or whey,
   - separation of precipitated protein,
   **characterised in that** following successively carried out process steps:
   a) part or full desalting of the whole part of milk and/or whey
   b) heating of the desalted milk and/or whey,
   c) adjustment of the pH-value of milk and/or whey in the hot condition for the precipitation of protein such that the pH-values correlated to the isoelectric points of the proteins of milk and/or whey will be passed through.

2. The process of claim 1 **characterised in that** the pH-values of the desalted milk and/or whey will be adjusted between 5,4 and 3,5.

3. The process of claim 1 or 2 **characterised in that** after desalting milk is besides added to said demineralized whey or after desalting whey is besides added to said demineralized milk.

4. Process according to one of the preceding claims **characterised in that** the said milk and/or whey is cooled before separation of the proteins, preferably to a temperature of between 20 °C and 70 °C.

5. Process according to one of the preceding claims **characterised in that** before or after desalting said milk and/or whey is concentrated.

6. Process according to claim 5 **characterised in that** the said milk and/or whey is concentrated up to a degree of 60 % dry solids.

7. Process according to one of the preceding claims **characterised in that** the adjustment of the pH is followed through acid, lye, microbiological or ion exchange.

8. Application of the process according to one of the claims from 1 to 7 in the production of milk-, acidic milk- and cheese products with improved coprecipitate generation and/or shelf life.


## Revendications

1. Procédé pour déprotéiner le lait et/ou le lactosérum en utilisant les traitements suivants:
   - Réglage du pH du lait et/ou du lactosérum dans la zone acide,
   - Chauffage du lait et/ou du lactosérum
   - Séparation des protéines précipitées
   **caractérisé** par la succéssion des traitements suivants:

5

a) Déminéralisation partielle ou totale de la totalité du lait et/ou du lactosérum prévue pour la déprotéination,

b) Chauffage du lait et/ou du lactosérum déminéralisé,

c) Réglage du pH pour précipitation complète des protéines du lait et/ou lactosérum chaud de facon que le pH circule sans interruption par le point isoélectrique des protéines du lait et/ou du lactosérum.

2. Procédé suivant la revendication 1, **caractérisé par le** réglage du pH du lait et/ou lactosérum déminéralisé entre 5,4 et 3,5.

3. Procédé suivant la revendication 1 ou 2, **caractérisé par** l'addition supplémentaire de lait au lactosérum déminéralisé, après la déminéralisation, ou de lactosérum au lait déminéralisé, après la déminéralisation.

4. Procédé suivant l'une des revendications précédentes, **caractérisé par** le refroidissement du lait et/ou du lactosérum de 20 jusqu'â 70 degré Celsius avant la séparation des protéines.

5. Procédé suivant l'une des revendications précédentes, **caractérisé par** la concentration du lait et/ou du lactosérum avant ou après la déminéralisation.

6. Procédé suivant la revendication 5, **caractérisé par** le réglage du lait et/ou lactosérum jusqu'a un extrait sec de 60 %.

7. Procédé suivant l'une des revendications précédentes, **caractérisé par** le fait que le réglage du pH se produit par acides, lessive alcaline, microbiologique ou par échange d'ions.

8. Utilisation du procédé suivant l'une des revendications de 1 a 7 pour la fabrication de produits laitiers, de lait tourné et de fromagerie avec formation de coprécipité et conservabilité.